# EUROPEAN PATENT APPLICATION

(11) **EP 4 141 889 A1**
(43) Date of publication of application: **01.03.2023**
(21) Application number: 21887016.0
(22) Date of filing: 04.06.2021
(51) Int. Cl.: G21C 3/04, G21C 3/18, G21C 1/02, G21C 3/07, G21C 3/10

(54) **FUEL ROD OF A WATER-COOLED WATER-MODERATED NUCLEAR REACTOR**

(30) Priority: 02.11.2020 RU 2020136162
(71) Applicant: Joint-Stock Company "TVEL", Moscow 115409 (RU)
(72) Inventor: NOVIKOV, Vladimir Vladimirovich, Moscow, 123458 (RU); KUZNETSOV, Vladimir Ivanovich, Moscow, 123098 (RU); MEDVEDEV, Anatolii Vasilevich, Moscow, 123098 (RU); LAGOVSKIY, Victor Borisovich, Moscow, 123060 (RU); GIZATULLIN, Timur Tagirovich, Kuluevo, 456895 (RU); SERGIENKO, Ivan Romanovich, Novomoskovsk, 301664 (RU)
(74) Representative: Yalçiner Patent and Consulting Ltd.
(86) International application number: PCT/RU2021/000242
(87) International publication number: WO 2022/093064

(57) **Abstract**

The invention relates to nuclear technology regarding fuel rods of a VVER-1200 reactor and concerns an improved design of fuel rods of a VVER-1000 reactor. The essence of the invention consists in modifying the design of the lower end plug and increasing the length of the fuel rods, as well as increasing the length and mass of a fuel element column, thus allowing an increase in reactor thermal output to 3300 MW. A reactor core formed from fuel assemblies is configured with provision for the increased reactor thermal output and the increased length of the fuel rods in the fuel assemblies and can be used in a reactor vessel with dimensions similar to those of a standard vessel of a VVER-1000 reactor. The result consists in increasing fuel burnup, allowing an increase in reactor thermal output to ≈ 3300 MW and increasing the overall energy output of the nuclear power facility while keeping the vessel dimensions and safety of the VVER-1000 reactor unchanged.

## Description

### TECHNICAL FIELD

The invention relates to nuclear technology and concerns an improved design of fuel rods included in the upgraded fuel assemblies (FAs) that constitute the core in a water-moderated vessel-type nuclear reactor of increased capacity, in particular the VVER-1200.

### BACKGROUND

The prospects for development of nuclear power engineering are considerably determined by solution of the problem related to enhancement of power yield and maintenance of the existing safety level at nuclear power plants (NPPs).

The problem of the cost efficiency increase at the operating NPPs with VVER reactors has various solutions. However, at present, it is usually solved through minimum modifications of the structural core components. This approach enables to utilize the available resources more efficiently without recourse to any significant adjustment of the processes in manufacturing of the structural components.

Currently, fuel rods are used in the nuclear reactors of the VVER type. A fuel rod has a fuel column consisting of individual cylindrical pellets located in the cladding which is a load-bearing structural component (see A.G. Samoilov, Fuel Rods for Nuclear Reactors. Moscow, Energoatomizdat, 1985, p. 99 - 107). The diameter of fuel rods is assumed to be as small as possible in order to enlarge the heat exchange surface and to reduce thermal stresses caused by temperature differential, and in the real designs of pressurized water reactors it varies from 7.35·10⁻³ m to 15·10⁻³ m (see G.N. Ushakov, Pressure Tubes and Fuel Rods of Nuclear Reactors. Moscow, Energoizdat, 1981, p. 32-36). The design of fuel rods, FAs and the core itself for the VVER reactors must ensure mechanical stability and strength of fuel rods, particularly under the emergency conditions with high temperatures.

A nuclear reactor fuel rod containing a leak-tight cladding, nuclear fuel in the form of cylindrical pellets arranged in a column along the cladding length and held in the set position with the use of a retainer in the form of split sleeves is known. The fuel rod cladding is made of a zirconium alloy (RU 2244347, G21C 3/00, 24.10.2002).

Drawback of the known fuel rod lies in the fact that this fuel rod has a retainer in the form of a split sleeve which does not provide for integrity of the fuel column in case of its potential displacement in the course of transportation and handling operations both for fresh and irradiated fuel, as distinct from a spring lock.

Change of the outer diameter of the fuel rod cladding which varies from 7.00·10⁻³ m to 8.79·10⁻³ m resulting in significant adjustment of the manufacturing technology for all fuel rod components is also a drawback causing complication of the manufacturing technology in comparison with the existing one.

The closest with regard to the technical essence and the achieved result is a fuel rod for the core of water-cooled water-moderated power reactors of the VVER type (see V.D. Shmelev, Yu.G. Dragunov, V.P. Denisov, I.N. Vasilchenko. Cores of VVERs for Nuclear Power Plants. Moscow: ICC Akademkniga, 2004, p. 106) consisting of the following parts: the upper end plug, the cladding, the lower end plug, the fuel column consisting of uranium dioxide pellets and the retainer. The cladding and end plugs are made of E110 alloy. The inner volume of the fuel rod is filled with helium under the pressure of (2.00±0.25) MPa in order to prevent any crumpling of the cladding in the course of operation. The fuel rod is sealed by welding. Compensatory space is provided in the upper section of the fuel rod in order to reduce the pressure of gaseous fission products under the cladding emitted in the course of operation. The fuel column is fixed with the use of the retainer in order to protect it against the impact of any transportation and handling loads. The upper end plug provides the possibility for attachment of the gripping device for the fuel rod removal - installation in the course of the FA assembly. The lower end plug is installed into the bottom grid and fastened by splinting.

Drawbacks lie in the fact that the length of the fuel rod and the fuel column in the fuel rods for the VVER-1000 reactor is smaller than the length of the fuel rods for the VVER-1200 reactor, thus the aggregate fuel loading in the core is also less which results in reduced power yield of the water-cooled water-moderated power reactor VVER-1000 as compared with the VVER-1200. Use of E110 alloy containing more hafnium than the high-purity E110 alloy as the cladding material results in increased absorption of neutrons by the fuel rod cladding which also causes reduction of the reactor power yield. Fastening of the lower end plug to the support grid by splinting results in more complicated and labor-intensive process for assembly and disassembly of fuel rods within the FA.

### DISCLOSURE OF THE INVENTION

The objective of the invention is to develop and create a new fuel rod for the water-cooled water-moderated power reactor VVER-1200 with increased power yield and maintenance of the existing safety level as well as to simplify the fresh (non-irradiated) FA assembly process due to optimization of the fuel rod design with the use of the available process equipment.

The technical result includes enhancement of energy efficiency and fuel burnup while maintaining reliability and safe operation of the water-cooled water-moderated power reactor fuel rod as well as simplification of the fresh FA assembly process.

The technical result is achieved by the fact that the fuel rod of a water-cooled water-moderated nuclear power reactor consists of the cylindrical cladding sealed with the upper and lower end plugs welded concentrically to the cladding with the inert atmosphere inside the fuel rod, containing the fuel column located concentrically in the cylindrical cladding and consisting of the fuel pellets with a center hole; wherein the fuel column is pressed against the lower end plug in the axial direction with the use of a spring lock which consists of the compensatory group coils providing the axial force for the fuel column pressing and the fixing group coils retaining the spring lock in the certain position due to force fitting to the inner surface of the cylindrical cladding; wherein the cladding and the end plugs are joined by butt resistance welding, and the weld j oint length is equal to one to three cladding wall thicknesses; wherein the weld zone does not extend beyond the initial cladding diameter, and the lower end plug represents a collet-type component with a stepped collar arranged in the bottom section and a slit located within the plane on the longitudinal axis and passing to the bottom end.

The fuel rod length L₀ is 4030 to 4036 mm.

The fuel column length L₁ is 3720 to 3740 mm.

The length of the free space under the fuel rod cladding L₂ is 250 to 270 mm.

The cladding length L₃ is 3995 to 4005 mm.

The fuel column weight is 1600 to 1800 g.

The cylindrical cladding is made of high-purity E110 zirconium alloy consisting of zirconium with addition of major impurities in the following ratio (% wt.): zirconium - basis; niobium - 0.8-1.5; iron - 0.02-0.08; oxygen - 0.05-0.1; carbon - up to 0.01; silicon - up to 0.02, hafnium - up to 0.010.

The spring lock is made of stainless steel.

The spring lock coil in contact with the top fuel pellet is pressed down to ensure contact and polished in order to form the contact plane between the coil and the fuel pellet.

Helium with the mass fraction of 90 to 99% in the final product is used as the inert gas under the cladding.

The above-mentioned set of features is new, unknown in the prior art and achieves the stated objective as:
- increase of the fuel column length and the fuel rod length enables to increase the aggregate fuel loading into the core. The justifying calculations demonstrated that the operability and reliability parameters identical to the fuel rods of the VVER-1000 reactor were ensured with relatively greater fuel loading, and the service life and fuel burnup were higher for the same parameters of the VVER-1200 reactor fuel rods;
- use of high-purity E110 alloy as the cladding material enables to reduce absorption of neutrons by the cladding due to decrease of hafnium content which results in increased power yield;
- use of the collet-type lower end plug in the fuel rod design enables to provide for assembly of fuel rods into a bundle and their reliable fixation without any additional tools and fasteners (splinting, etc.).

- use of butt resistance welding enables to enhance reliability and to simplify the fuel rod assembly process;
- mechanical hardening of the inner cladding surface on the section from the bottom end of the upper end plug to the fixing group of coils inclusively takes place upon the spring lock installation thus increasing the safety margin as per the buckling failure criterion in the course of hydraulic pressure testing;
- the spring lock is installed in such a way so that the outermost coil of the spring lock pressed down till contact and polished is in contact with the top fuel pellet in order to form the contact plane between the coil and the fuel pellet thus enabling to enhance the fuel rod reliability.
- use of helium with the mass fraction of 90 to 99% in the final product as the inert gas under the cladding increases thermal conductivity and corrosion resistance of the internal fuel rod cladding surface.
- the selected length of the weld joint equal to one to three cladding wall thicknesses whereas the weld zone does not extend beyond the initial cladding diameter ensures reliability and safe operation of the fuel rod.

### EMBODIMENT OF THE INVENTION

Confirmation of the technical result achievement is presented in Table 1 and Table 2 where the calculated design parameters for the fuel rods of the VVER-1000 and VVER-1200 reactors are shown in comparison.

**Table 1 - Design burnup**

| Component | Fuel burnup with due regard for safety margins, MW·day/kgU | |
|---|---|---|
| | VVER-1200 | VVER-1000 |
| Fuel rod | 80.4 | 74.0 |
| Fuel rod pellet | 89.1 | 82.0 |

**Table 2 - Design safety margins under steady-state operation conditions according to the thermal, physical, strength and strain criteria**

| Acceptance criterion | Standard safety margin | Design safety margin for VVER-1200 | Design safety margin for VVER-1000 |
|---|---|---|---|
| Melting temperature | krci =1.1 | 1.76 | 1.74 |
| Cladding corrosion | k_{KC1} =1.5 | 2.0 | » 1.5 |
| Stress corrosion cracking | k_{SC1} =1.2 | 1.40 | 1.31 |
| Stability | k_{SC3} =1.5 | 1.71 | 1.67 |
| Elongation | k_{DC2} =1.25 | 1.59 | 1.34 |

Comparison of the data in Table 1 demonstrates increase of the design burnup limit both for the fuel rod in average and for the pellet of the VVER-1200 reactor as compared with the VVER-1000 reactor. Comparison of the safety margins for the design operability criteria is presented in Table 2 where it can be seen that the design safety margins for the fuel rods of the VVER-1200 reactor are higher than the standard values and higher than the values for the fuel rods of the VVER-1000 reactor.
Fig. 1 shows a longitudinal section variant of the claimed fuel rod for the VVER-1200 reactor.

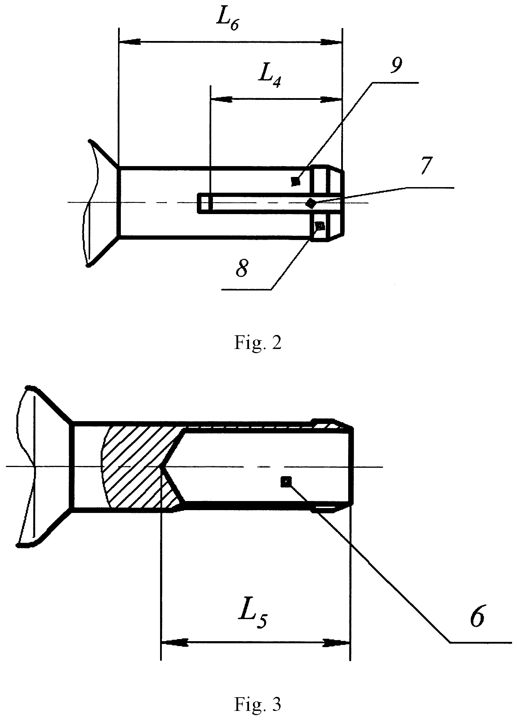

Fig. 2 shows a magnified image of the lower end plug.
Fig. 3 shows the lower end plug section.
Fig. 4 is a diagram showing estimated elongations of fuel rods depending on burnup for the fuel rods of the VVER-1200 reactor.
Fig. 5 is a diagram showing estimated elongations of fuel rods depending on burnup for the fuel rods of the VVER-1000 reactor.
Fig. 6 is a diagram showing estimated changes of the fuel rod cladding diameter depending on burnup for the fuel rods of the VVER-1200 reactor.
Fig. 7 is a diagram showing estimated changes of the fuel rod cladding diameter depending on burnup for the fuel rods of the VVER-1000 reactor.
Fig. 8 is a diagram showing estimated circumferential stresses on the internal surface of the cladding during the steady-state refueling cycle for the fuel rods of the VVER-1200 reactor.
Fig. 9 is a diagram showing estimated circumferential stresses on the internal surface of the cladding in the course of the steady-state refueling cycle for the fuel rods of the VVER-1000 reactor.
Fig. 10 is a diagram showing estimated gas pressure values for the fuel rods of the VVER-1200 reactor in the course of the steady-state cycle for both cold and hot state.
Fig. 11 is a diagram showing estimated gas pressure values for the fuel rods of the VVER-1000 reactor in the course of the steady-state cycle for both cold and hot state.

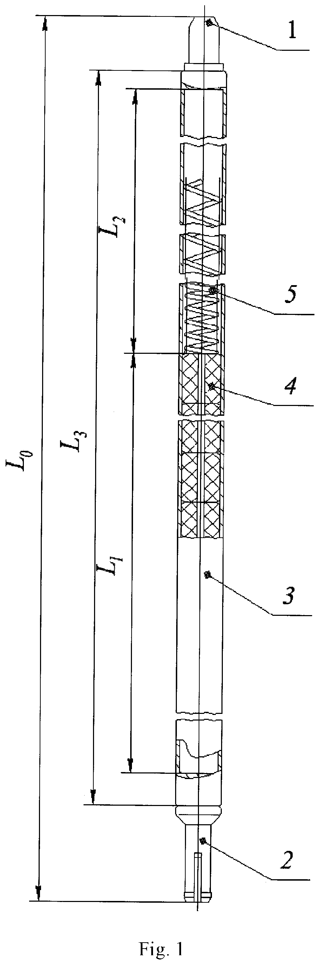

The fuel rod of a water-cooled water-moderated nuclear power reactor (Fig. 1) consists of the following structural components: the fuel column consisting of fuel pellets (4) with a center hole, the spring lock (5), the cylindrical cladding (3), the upper (1) and lower end plugs (2). The fuel column is located in the fuel rod cladding (3), the end of the bottom fuel pellet (4) is in contact with the lower end plug (2), the top fuel pellet (4) is in contact with the spring lock (5) which is fastened in the cylindrical cladding (3) by tensioning and provides for the fuel column pressing and integrity maintenance. The upper (1) and lower (2) end plugs are tightly welded into the cylindrical cladding (3) thus forming a leak-tight cavity inside the fuel rod. During welding of the upper end plug (1) to the cylindrical cladding (3) pressurized inert gas is supplied into the fuel rod in order to ensure corrosion resistance, strength of the fuel rod and thermal conductivity. The peculiarity of the lower end plug (2) is that is has: the slit (7) with the length L₄ of 9 to 13 mm; the cylindrical groove (6) with the length L₅ of 9 to 13 mm; the collet part (9) with the length L₆ of 15 to 16 mm; the collar with the cone-shaped section (8). The lower end plug (2) of the fuel rod is fixed in the FA support grid during the FA assembly due to resilience of the collet part with the slit. In the course of the fuel rod assembly into the FA, the slit is compressed, and the outer diameter of the collar is reduced to the value corresponding to the inner diameter of the FA grid; then the collet part of the end plug is pushed into the FA grid all the way; the slit is released into its original state, and the initial outer diameter of the collar is restored; the collar thrusts against the FA grid thus preventing any axial displacement of the lower end plug and the fuel rod.

The lower end plug with the design described above allows to achieve one of the set objectives - simplification of the fresh FA assembly process.

### INDUSTRIAL APPLICABILITY

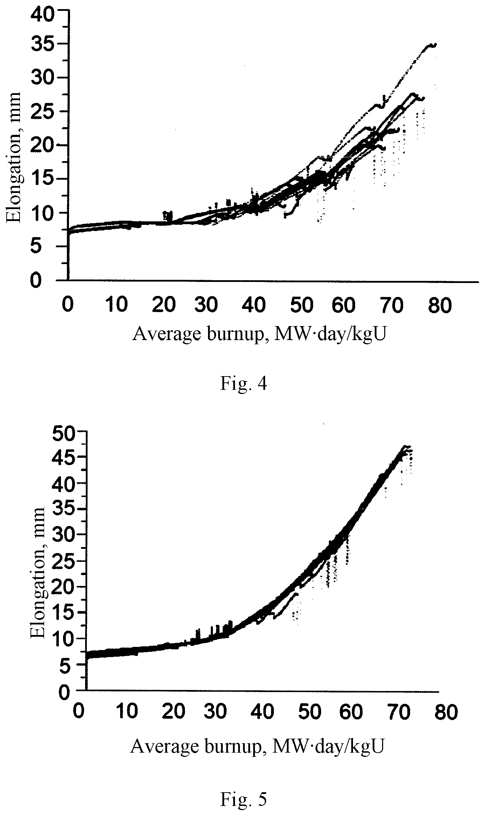

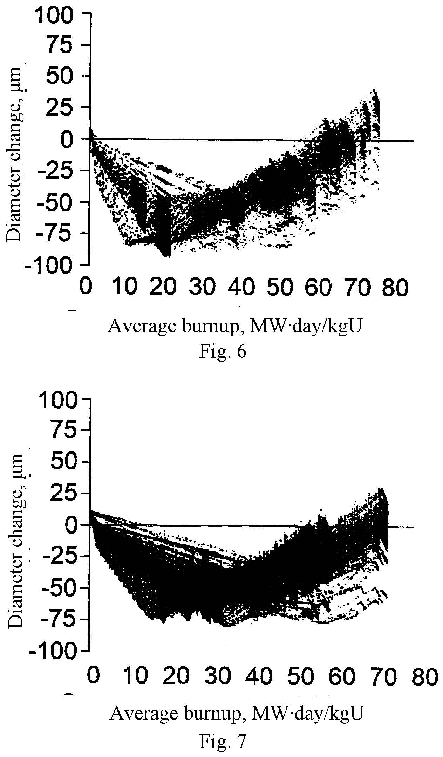

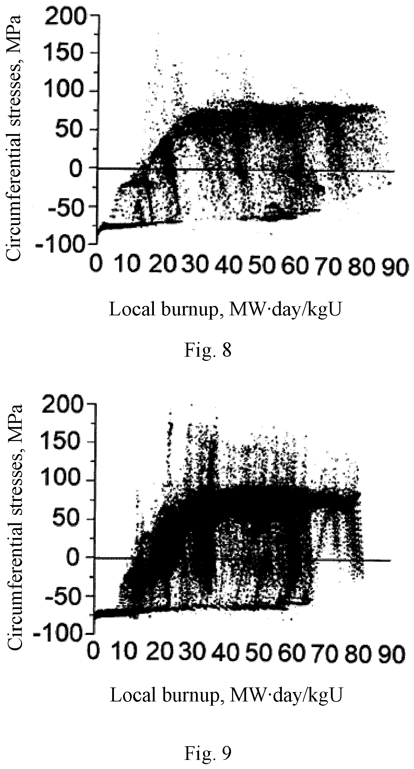

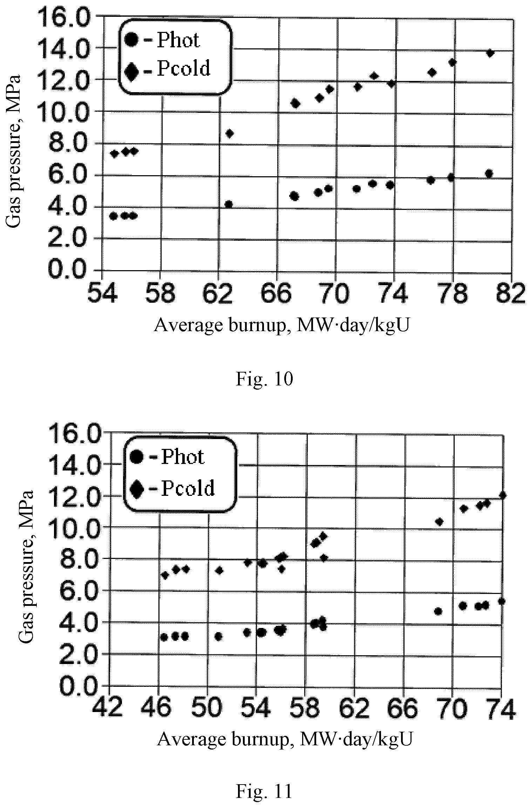

Considering the design data presented at Fig. 4 - Fig. 11, it can be asserted that under the normal operation conditions elongation of the fuel rods and their diameter change are reduced; the circumferential stresses are decreased, and the internal pressure for the VVER-1200 fuel rods has not increased in comparison with the design of fuel rods for the VVER-1000 reactor. In particular, the power density limit for the fuel rods is reduced as their claddings represent one of the basic barriers against propagation of radioactive substances and can lose their integrity under emergency conditions, primarily due to overheating. This solution is determined by the enhanced requirements for the NPP safety level and long-term successful experience in operation of nuclear fuel of the existing design.

## Claims

1. A fuel rod of a water-cooled water-moderated nuclear reactor comprised of a cylindrical cladding sealed with a lower end plug and an upper end plug welded concentrically to the cladding with an inert atmosphere inside the fuel rod, the fuel rod comprising a fuel column located concentrically in the cylindrical cladding and assembled from fuel pellets with a center hole,
wherein the fuel column is pressed against the lower end plug in the axial direction with the use of a spring lock, the spring lock comprised of
compensatory group coils providing the axial force for the fuel column pressing, and
fixing group coils holding the spring lock in a certain position due to force fit to the inner surface of the cylindrical cladding,
**characterized in that**
the cladding and the end plugs are joined together by butt resistance welding, and the weld joint length is from one to three thicknesses of a cladding wall;
wherein the area of the weld joint does not extend beyond the initial cladding diameter, and
the lower end plug is a collet-type component with a stepped collar arranged in a bottom section, and
a slit is provided within the plane of the longitudinal axis, the slit passing to the bottom end.

2. The fuel rod of a water-cooled water-moderated nuclear reactor according to claim 1, wherein the fuel rod length L₀ is from 4030 to 4036 mm.

3. The fuel rod of a water-cooled water-moderated nuclear reactor according to claim 1, wherein the fuel column length L₁ is from 3720 to 3740 mm.

4. The fuel rod of a water-cooled water-moderated nuclear reactor according to claim 1, wherein the length of the free space under the fuel rod cladding L₂ is from 250 to 270 mm.

5. The fuel rod of a water-cooled water-moderated nuclear reactor according to claim 1, wherein the cladding length L₃ is from 3995 to 4005 mm.

6. The fuel rod of a water-cooled water-moderated nuclear reactor according to claim 1, wherein the fuel column weight is from 1600 to 1800 g.

7. The fuel rod of a water-cooled water-moderated nuclear reactor according to claim 1, wherein the cylindrical cladding is made of a high-purity E110 zirconium alloy consisting of zirconium with addition of major impurities in the following ratio (% wt.): zirconium - base; niobium - 0.8-1.5; iron - 0.02-0.08; oxygen - 0.05-0.1; carbon - up to 0.01; silicon - up to 0.02, hafnium - up to 0.010.

8. The fuel rod of a water-cooled water-moderated nuclear reactor according to claim 1, wherein the spring lock is made of stainless steel.

9. The fuel rod of a water-cooled water-moderated nuclear reactor according to claim 1, wherein the spring lock coil in contact with the top fuel pellet is pressed down to ensure contact and polished in order to form a contact plane between the coil and the fuel pellet.

10. The fuel rod of a water-cooled water-moderated nuclear reactor according to claim 1, wherein helium is used as the inert gas under the cladding, having a mass fraction in the final product in the range from 90 to 99%.
